# EUROPEAN PATENT SPECIFICATION

(11) **EP 4 215 283 B1**
(45) Date of publication and mention of the grant of the patent: **12.11.2025**
(21) Application number: 22208984.9
(22) Date of filing: 23.11.2022
(51) Int. Cl.: B05D 7/14, B60J 5/10, E05D 5/02

(54) **VEHICLE ROOF**
FAHRZEUGDACH
TOIT DE VÉHICULE

(30) Priority: 17.12.2021 JP 2021205302
(43) Date of publication of application: 26.07.2023
(73) Proprietor: Toyota Jidosha Kabushiki Kaisha, Aichi-Ken 471-8571 (JP)
(72) Inventor: TANAKA, Yuya, Toyota-shi, 471-8571 (JP); MATSUOKA, Tomoaki, Toyota-shi, 471-8571 (JP); TSUZUKI, Yoshihiko, Toyota-shi, 471-8571 (JP); KONDO, Nobuyo, Toyota-shi, 471-8571 (JP)
(74) Representative: J A Kemp LLP

(56) References cited:
- WO-A1-2022/215384
- US-A1- 2006 290 169
- US-B2- 10 336 047
- US-B2- 10 378 819

## Description

### BACKGROUND

The present disclosure relates to a vehicle roof, and in particular to a vehicle roof with a hinge attached thereto.

Japanese Unexamined Patent Application Publication No. 2015-202686 discloses that a resin-coated steel plate of which the surface is coated with a resin layer and thereby has a rust prevention property is used in a vehicle.

US 10,336,047 B2 discloses a method of preventing corrosion of mating surfaces of components. components, disclosing features of the preamble of claim 1.

### SUMMARY

The inventors of the present application have conceived an idea of applying a resin-coated steel plate to a roof, a hinge, or the like of a vehicle, but have found the following problem.

Since resin-coated steel plates are more expensive than ordinary steel plates, it is necessary to carefully select parts in a vehicle in which such expensive resin-coated steel plates are used.

It should be noted that, in many cases, a hatchback door is attached to a roof through hinges so that the hatchback door can be opened and closed. However, a nozzle (i.e., a nozzle for spraying a sealer) cannot be easily brought close to the parts of the roof at which the hinges are attached (hereinafter also referred to as the attachment part), so that it is difficult to apply the sealer thereto. Therefore, there has been a possibility that the rust prevention property of the attachment part cannot be ensured.

In view of the above-described problem, an object of the present disclosure is to provide a vehicle roof capable of ensuring a rust prevention property while preventing or reducing the increase in cost.

The invention is defined by the independent claims. Further aspects and preferred embodiments are defined in the dependent claims. Any aspects, embodiments and examples of the present disclosure which do not fall under the scope of the appended claims do not form part of the invention and are merely provided for illustrative purposes.

A first exemplary aspect is a vehicle roof including an attachment part to which a hinge is attached, in which
the attachment part includes a steel plate, and a first resin layer covering a hinge-side surface of the steel plate, and
the first resin layer is thicker than a hinge resin layer covering the hinge.

According to the above-described configuration, the hinge-side surface of the steel plate of the attachment part is coated with the first resin layer which is thicker than the hinge resin layer. Therefore, it is possible to ensure a satisfactory rust prevention property of the attachment part of the vehicle roof. Further, since the hinge resin layer is thinner than the first resin layer, the total amount of the resin used for the resin layer can be reduced, thus making it possible to prevent or reduce the increase in cost.

An unclaimed exemplary aspect is a vehicle roof including an attachment part to which a hinge is attached, in which
the attachment part includes a steel plate, and a first resin layer covering a hinge-side surface of the steel plate, and
the hinge is coated with a hinge resin layer.

According to the above-described structure, the hinge-side surface of the steel plate of the attachment part is coated with the first resin layer which is thicker than the hinge resin layer. Therefore, it is possible to ensure a satisfactory rust prevention property of the attachment part of the vehicle roof.

Further, the vehicle roof further includes a central part that is disposed closer to a center of the vehicle roof than the attachment part is, and a second resin layer covering the central part, and the first resin layer is thicker than the second resin layer.

According to the above-described structure, since the first resin layer is thicker than the second resin layer covering the central part, it is possible to prevent or reduce the increase in cost while also ensuring the rust prevention property of the central part of the vehicle roof.

Further, according to an unclaimed example, the vehicle roof may further include a central part that is disposed closer to a center of the vehicle roof than the attachment part is, and the central part may not be coated with any resin layer.

According to the above-described structure, according to an unclaimed example, since the central part is not coated with the second resin layer, the total amount of the resin used for the resin layer can be reduced.

Further, the vehicle roof may further include a third resin layer covering a vehicle-interior-side surface of the steel plate, and
the first resin layer may be thicker than the third resin layer.

According to the above-described structure, the third resin layer covers the vehicle-interior-side surface of the steel plate, and is thinner than the first resin layer. Therefore, it is possible to reduce the total amount of the resin used for the resin layer while ensuring the rust prevention property of the vehicle-interior-side surface of the steel plate. Further, since the first resin layer is thicker than the third resin layer, the rust prevention property of the hinge-side surface of the steel plate can be improved.

Further, the vehicle-interior-side surface of the steel plate may not be coated with any resin layer.

According to the above-described structure, since the vehicle-interior-side surface of the steel plate is not coated with any resin layer, the total amount of the resin used for the resin layer can be reduced.

Further, the attachment part and the central part may be formed by using a tailored blank material.

According to the above-described structure, the attachment part and the central part, of which the thicknesses of the resin layers differ from each other, or whether they include the resin layer or not differ from each other, can be manufactured by using a tailored blank material.

According to the present disclosure, it is possible to ensure a rust prevention property while preventing or reducing the increase in cost.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a perspective view showing a rear part of a vehicle including an example of a vehicle roof according to a first example;
Fig. 2 is a cross-sectional view showing a rear part of a vehicle including an example of a vehicle roof according to the first example;
Fig. 3 is a schematic partially-cut cross-sectional view of an unclaimed example of the vehicle roof according to the first example;
Fig. 4 is a schematic partially-cut cross-sectional view of an unclaimed first modified example of the vehicle roof according to the first example;
Fig. 5 is a schematic partially-cut cross-sectional view of a second modified example of the vehicle roof according to the first example;
Fig. 6 is a schematic partially-cut cross-sectional view of an unclaimed third modified example of the vehicle roof according to the first example; and
Fig. 7 is a schematic partially-cut cross-sectional view of a fourth modified example of the vehicle roof according to the first example.

### DESCRIPTION OF EMBODIMENTS

Specific embodiments to which the present disclosure is applied will be described hereinafter in detail with reference to the drawings. However, the present disclosure is not limited to the below-shown embodiments. Further, the following description and drawings are simplified as appropriate for clarifying the explanation.

### (First Example)

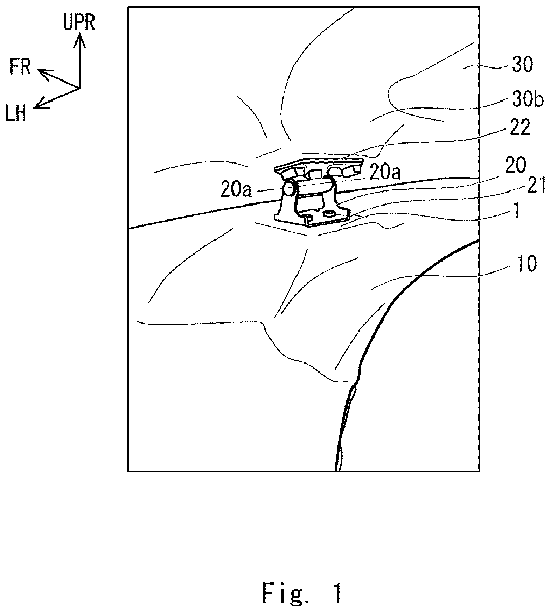

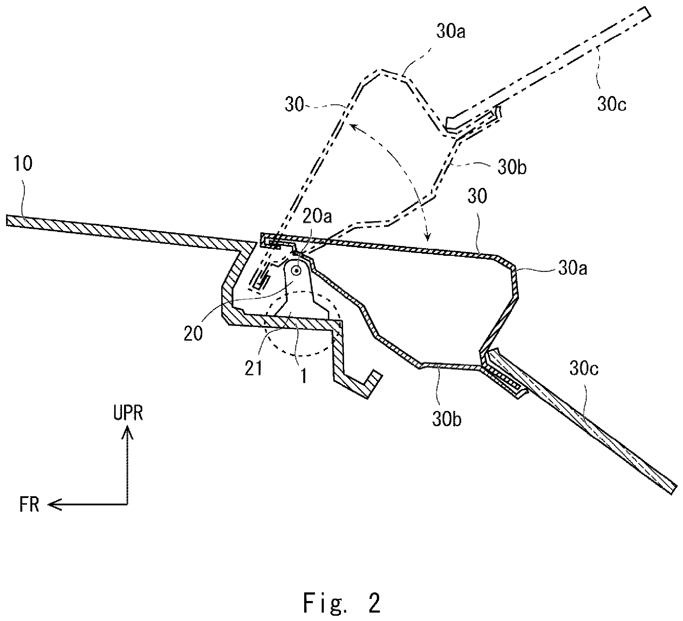

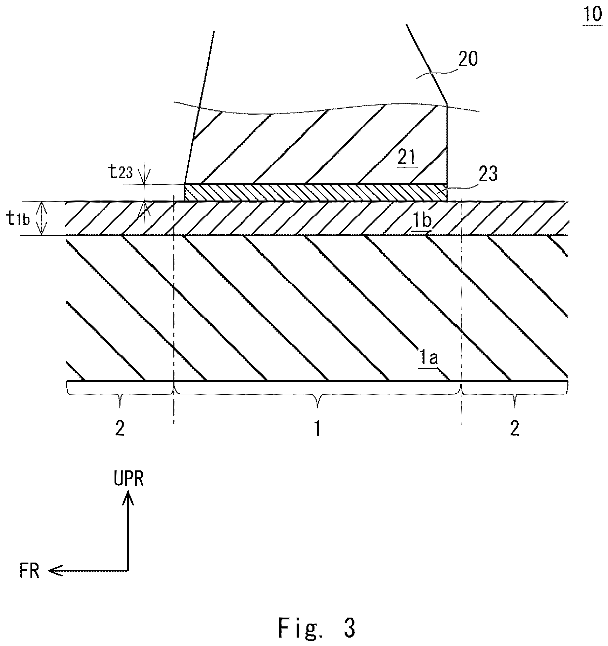

A first example will be described with reference to Figs. 1 to 3. Fig. 1 is a perspective view showing a rear part of a vehicle including an example of a vehicle roof according to the first example. Fig. 2 is a cross-sectional view showing the rear part of the vehicle including the example of the vehicle roof shown in Fig. 1. Fig. 3 is a schematic partially-cut cross-sectional view of an unclaimed example of the vehicle roof shown in Fig. 1.

Note that, needless to say, three-dimensional coordinate systems shown in Fig. 1 and the other drawings are shown just for explaining the positional relationship among components. In general, in the drawings, a symbol "UPR" indicates the upward of the vehicle; "FR" indicates the forward of the vehicle; and "LH" indicates the left side of the vehicle. These symbols are common throughout the drawings. The side opposite to the UPR indicates the interior side of vehicle.

As shown in Fig. 1, a vehicle roof 10 includes an attachment part 1 to which a hinge 20 is attached. The vehicle roof 10 may be formed by pressing and/or cutting a resin-coated steel plate as appropriate. The attachment part 1 is also referred to as a roof hinge part. The hinge 20 is attached to the vehicle roof 10 and to a back door 30. Specifically, the hinge 20 includes attaching parts 21 and 22. The attaching part 21 is attached to the attachment part 1 of the vehicle roof 10. It is difficult to apply a sealer or a wax, which is applied in order to prevent rusting, to the front side of the contact interface between the attachment part 1 and the attaching part 21. A back door inner 30b (which will be described later) of the back door 30 is attached to the attaching part 22.

As shown in Fig. 2, the back door 30 is attached to the vehicle roof 10 through the hinge 20 in such a manner that the back door 30 can be rotated around a back door rotation axis 20a of the hinge 20. The back door 30 includes a back door outer 30a, the back door inner 30b, and a back door glass 30c. The back door 30 is rotated around the back door rotation axis 20a, so that it is opened in such a manner that the back door glass 30c is moved upward.

As shown in Fig. 3, the vehicle roof 10 includes a steel plate 1a and a first resin layer 1b. The vehicle roof 10 has similar structures in the attachment part 1 and in the central part 2. The central part 2 is a part that is located closer to the center of the vehicle roof than the attachment part 1 of the vehicle roof 10 is. The central part 2 is preferably continuous with the attachment part 1.

The steel plate 1a has a shape that conforms to the shape of the roof of the vehicle. The steel plate 1a has mechanical properties required as the material of the vehicle roof 10. Specifically, the steel plate 1a is preferably made of a normal steel or a steel containing an additive element(s) such as chromium. Further, a plating film may be provided on the surface of the steel plate 1a. The type of the plating film provided on the surface of the steel plate 1a is not limited any particular types. Examples of applicable plating films include plating containing at least one of zinc, aluminum, cobalt, tin, and nickel, and alloy plating containing at least one of these metallic elements, other metallic elements, and/or non-metallic elements. Further, depending on the use, both surfaces of the metal plate or only one surface thereof may be coated with a coating film. Further, either only a part(s) of the surface of the metal plate or the entire surface thereof may be coated with a coating film.

The first resin layer 1b covers the surface of the steel plate 1a on the side on which the hinge 20 is located (which is also referred to as the hinge 20-side surface of the steel plate 1a). The first resin layer 1b contains a resin and has a rust prevention property higher than that of the steel plate 1a. As a result, the first resin layer 1b improves the rust prevention property of the steel plate 1a. Examples of such a resin include a water-based coating composition or an organic resin such as an organic solvent-based coating composition. In order to further improve the adhesion of the first resin layer 1b to the steel plate 1a, the corrosion resistance of the steel plate 1a, and the like, an undercoating film may be provided between the first resin layer 1b and the surface of the steel plate 1a. In the case where such an undercoating film is provided as described above, the number of undercoating layers and the composition thereof are not limited to any particular numbers and any particular compositions. The first resin layer 1b may further contain a pigment(s). Examples of such pigments include rust prevention pigments and conductive pigments. The type of the rust prevention pigment and the type of the conductive pigment are not limited to any particular types of pigments. However, the rust prevention pigment preferably includes, for example, at least one substance selected from silicate compounds, phosphate compounds, vanadate compounds, and metal oxide fine particles. Further, the conductive pigment preferably contains, for example, at least one substance selected from metals, alloys, conductive carbon, iron phosphide, carbides, and semiconductor oxides.

Note that the vehicle roof 10 may include at least one of an electrodeposition coating layer, an intermediate coating layer, and a top coating layer. At least one of the electrodeposition coating layer, the intermediate coating layer, and the top coating layer covers at least a part of the first resin layer 1b.

The hinge 20 is in contact with the attachment part 1. The hinge 20 is in contact with the steel plate 1a through the first resin layer 1b. (i.e., the first resin layer 1b is provided between the hinge 20 and the steel plate 1a. The first resin layer 1b insulates the steel plate 1a against the hinge 20.) The first resin layer 1b has a predetermined thickness t_{1b}.

The hinge 20 includes the attaching parts 21 and 22, and a hinge resin layer 23. The hinge resin layer 23 covers the surface of the attaching part 21 of the hinge 20on the side on which the attachment part 1 is located. The first resin layer 1b is thicker than the hinge resin layer 23. In other words, the thickness t_{1b} of the first resin layer 1b is larger than the thickness t₂₃ of the hinge resin layer 23.

According to the above-described structure of the vehicle roof 10, the surface of the steel plate 1a of the attachment part 1 on the side on which the hinge 20 is located (which is also referred to as the hinge 20-side surface of the steel plate 1a of the attachment part 1) is coated with the first resin layer 1b which is thicker than the hinge resin layer 23. Therefore, it is possible to ensure a satisfactory rust prevention property of the attachment part 1 of the vehicle roof 10. Further, since the hinge resin layer 23 is thinner than the first resin layer 1b, the total amount of the resin can be reduced, thus making it possible to prevent or reduce the increase in cost.

Further, according to the structure of the vehicle roof 10, the surface of the steel plate 1a of the central part 2 on the side on which the hinge 20 is located (which is also referred to as the hinge 20-side surface of the steel plate 1a of the central part 2) is also coated with the first resin layer 1b. Therefore, it is also possible to ensure a satisfactory rust prevention property of the central part 2 of the vehicle roof 10. Further, it is also possible to ensure a satisfactory rust prevention property of a part(s) where a sealer or a wax cannot be easily applied, and a satisfactory rust prevention property of the front side of the contact interface between the attachment part 1 and the attaching part 21.

Next, an example of a method for manufacturing a vehicle roof 10 will be described. Firstly, a coating film is applied to (i.e., is formed on) the hinge 20-side surface of the steel plate 1a, and a first resin layer 1b is thereby formed on the hinge 20-side surface of the steel plate 1a. Next, the steel plate 1a, on which the first resin layer 1b has been formed, is processed or molded into a shape that conforms to the shape of the roof of the vehicle. In this way, the vehicle roof 10 can be manufactured. If necessary, at least one of electrodeposition coating, intermediate coating, and top coating may be applied to (i.e., formed on) the above-described processed or molded steel plate 1a.

### (Unclaimed First Modified Example)

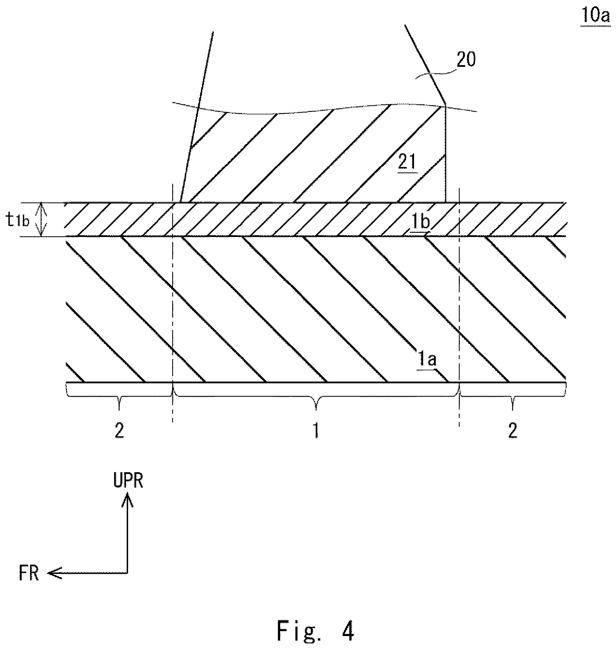

A vehicle roof 10a shown in Fig. 4 is a first modified example of the vehicle roof 10 shown in Fig. 3. Fig. 4 is a schematic partially-cut cross-sectional view of the unclaimed first modified example of the vehicle roof shown in Fig. 3. The vehicle roof 10a has a structure identical to that of the vehicle roof 10 except that the hinge 20 is not coated with any resin layer.

The vehicle roof 10a includes the hinge 20. The hinge 20 is not coated with any resin layer. In other words, the thickness t₂₃ of the hinge resin layer 23 shown in Fig. 3 is 0 (zero). When the thickness t₂₃ of the hinge resin layer 23 of the vehicle roof 10 shown in Fig. 3 is zero, the vehicle roof 10 and the vehicle roof 10a have structures identical to each other.

According to the above-described structure of the vehicle roof 10a, similarly to the vehicle roof 10, the hinge 20-side surfaces of the steel plate 1a of the attachment part 1 and the central part 2 of the vehicle roof 10 are coated with the first resin layer 1b. Therefore, it is possible to ensure a satisfactory rust prevention property of the attachment part 1 and the central part 2 of the vehicle roof 10. Further, since the hinge 20 is not coated with any resin layer, the total amount of the resin used for the resin layer can be reduced, thus making it possible to reduce the cost.

### (Second Modified Example)

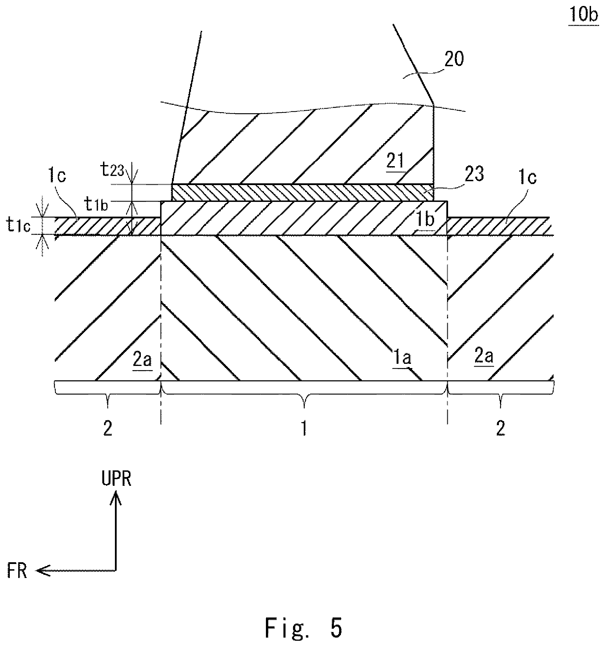

A vehicle roof 10b shown in Fig. 5 is a second modified example of the vehicle roof 10 shown in Fig. 3. Fig. 5 is a schematic partially-cut cross-sectional view of the second modified example of the vehicle roof shown in Fig. 3. The vehicle roof 10b has a structure identical to that of the vehicle roof 10 except that the vehicle roof 10b includes a second resin layer 1c.

As shown in Fig. 5, the vehicle roof 10b includes the second resin layer 1c. The second resin layer 1c covers the central part 2. The vehicle roof 10b may be formed by using a tailored blank material(s). The tailored blank material is a steel material for press obtained by welding or joining a plurality of steel plates for a tailored blank which are made of different materials and/or have different thicknesses. The tailored blank material is, for example, formed by joining a steel plate, which constitutes the attachment part 1, with another steel plate, which constitutes the central part 2. The type of the material of each of the above-described plurality of steel plates for a tailored blank and the thickness thereof are determined according to the part of the press-molded body. Further, each of the plurality of steel plates for a tailored blank may include a resin layer. Further, the types and the thicknesses of the resin layers and the steel plates may be different from one to another. The type of the material, the thickness, and the like of the attachment part 1 may differ from those of the central part 2. The type of the material, the thickness, and the like of the first resin layer 1b may differ from those of the second resin layer 1c. The steel plate 2a according to this example has the same thickness as that of the steel plate 1a, and the second resin layer 1c is thinner than the first resin layer 1b. Note that the thickness of the steel plate 2a may differ from that of the steel plate 1a. The resin-coated steel plate of the vehicle roof 10b may be manufactured by, for example, welding steel plates for a tailored blank corresponding to the steel plate 2a and the steel plate 1a, respectively, to each other and thereby forming a steel material for press, and thenpress-molding this steel material for press. The vehicle-exterior-side surface of
the steel plates for a tailored blank (i.e., the surface of the steel plates for a tailored blank which will be disposed on the exterior side of the vehicle when the vehicle roof is mounted to the vehicle) corresponding to the steel plate 2a is coated with the second resin layer 1c. The vehicle-exterior-side surface of the steel plates for a tailored blank corresponding to the steel plate 1a is coated with the first resin layer 1b.

The first resin layer 1b is thicker than the second resin layer 1c. In other words, the thickness t_{1b} of the first resin layer 1b is larger than the thickness t_{1c} of the second resin layer 1c. The second resin layer 1c has a structure similar to that of the first resin layer 1b. The second resin layer 1c contains a resin and has a corrosion resistance higher than that of the steel plate 1a. Owing to these features, the second resin layer 1c improves the rust prevention property of the steel plate 1a.

According to the above-described structure of the vehicle roof 10b, the second resin layer 1c covers the central part 2 of the vehicle roof 10b. Therefore, it is possible to ensure a satisfactory rust prevention property of the central part 2. Therefore, it is possible to ensure a satisfactory rust prevention property of the central part 2 of the vehicle roof 10b as well as the satisfactory rust prevention property of the attachment part 1 thereof.

Further, according to the structure of the vehicle roof 10b, the first resin layer 1b is thicker than the second resin layer 1c. Therefore, the total amount of the resin used for the resin layer can be reduced, thus making it possible to reduce the cost.

Further, according to the structure of the vehicle roof 10b, the attachment part 1 and the central part 2 are formed by using a tailored blank material(s). Therefore, it is possible, by using a steel plate(s) for a tailored blank of which the thickness of a resin layer(s) is constant and the presence/absence of the resin layer is unchanged irrespective of the part of the steel plate, to easily manufacture a vehicle roof 10b of which the thickness of the resin layer varies according to the part of the steel plate. That is, it is possible to easily manufacture a vehicle roof 10b of which the thickness of the resin layer varies according to the part of the steel plate without changing the thickness of the resin layer of the same steel material for press, and without changing the presence/absence of the resin layer thereof.

### (Unclaimed Third Modified Example)

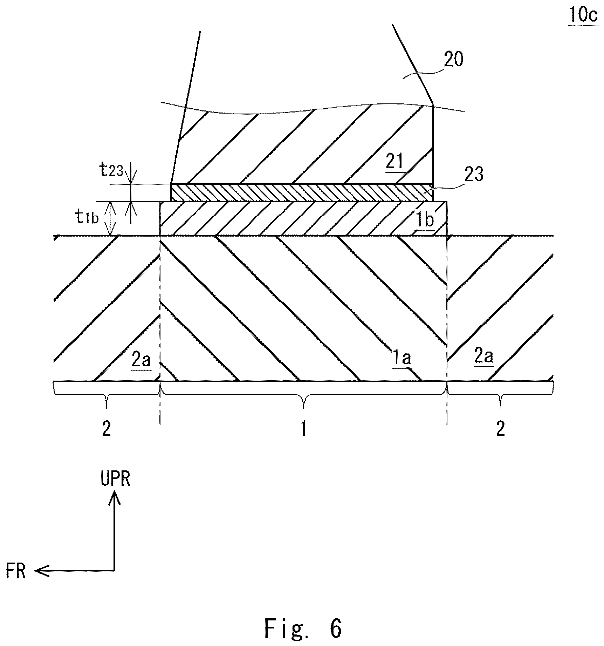

A vehicle roof 10c shown in Fig. 6 is an unclaimed third modified example of the vehicle roof 10 shown in Fig. 3. Fig. 6 is a schematic partially-cut cross-sectional view of the third modified example of the vehicle roof shown in Fig. 3. The vehicle roof 10c has a structure identical to that of the vehicle roof 10b shown in Fig. 5 except that the vehicle roof 10c does not include the second resin layer 1c.

The vehicle roof 10c does not include the second resin layer 1c. The central part 2 is not coated with any resin layer. In other words, when the thickness t_{1c} of the second resin layer 1c is 0 (zero), the vehicle roof 10b shown in Fig. 5 has a structure identical to that of the vehicle roof 10c.

Therefore, according to the structure of the vehicle roof 10c, the central part 2 is not coated with any resin layer. Accordingly, the total amount of the resin used for the resin layer can be reduced, thus making it possible to reduce the cost.

### (Fourth Modified Example)

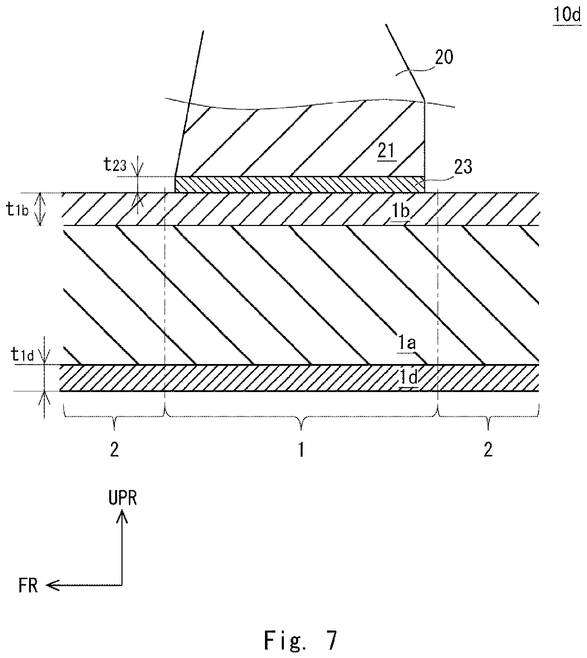

A vehicle roof 10d shown in Fig. 7 is a fourth modified example of the vehicle roof 10 shown in Fig. 3. Fig. 7 is a schematic partially-cut cross-sectional view of the fourth modified example of the vehicle roof shown in Fig. 3. The vehicle roof 10d has a structure identical to that of the vehicle roof 10 shown in Fig. 3 except that the vehicle roof 10d includes a third resin layer 1d.

The vehicle roof 10d includes the third resin layer 1d, and the third resin layer 1d covers at least a part of the vehicle-interior-side surface of the steel plate 1a (i.e., the surface of the steel plate 1a which will be disposed on the interior side of the vehicle when the vehicle roof is mounted to the vehicle). The third resin layer 1d is thinner than the first resin layer 1b. The thickness t_{1d} of the third resin layer 1d is thinner than the thickness t_{1b} of the first resin layer 1b. Similarly to the first resin layer 1b, the third resin layer 1d contains a resin and has a rust prevention property higher than that of the steel plate 1a.

Therefore, according to the structure of the vehicle roof 10d, the third resin layer 1d covers the vehicle-interior-side surface of the steel plate 1a, and is thinner than the first resin layer 1b. Therefore, it is possible to reduce the total amount of the resin used for the resin layer while ensuring the rust prevention property of the vehicle-interior-side surface of the steel plate 1a. Further, since the first resin layer 1b is thicker than the third resin layer 1d, the rust prevention property of the hinge 20-side surface of the steel plate 1a can be improved.

The invention is defined by the claims. Note that the present disclosure is not limited to the above-described embodiments, and they may be modified as appropriate. Further, the present disclosure may be carried out by combining the above embodiments and their examples with one another as desired. For example, in each of the vehicle roofs 10b, 10c and 10d shown in Figs. 5, 6 and 7, respectively, the hinge 20 may not be coated with any resin layer as in the case of the vehicle roof 10a shown in Fig. 4. Further, each of the vehicle roofs 10a and 10d include the second resin layer 1c as in the case of the vehicle roof 10b. Further, in an unclaimed example, in each of the vehicle roofs 10a and 10d, the central part 2 may not be coated with any resin layer as in the case of the vehicle roof 10c. Further, each of the vehicle roofs 10, 10a, 10b and 10c may include the third resin layer 1d as in the case of the vehicle roof 10d.

## Claims

1. A vehicle roof (10b, 10d) comprising an attachment part (1) to which a hinge (20) is attached, a central part (2) and a second resin layer (1c), wherein
the attachment part (1) comprises a steel plate (1a), and a first resin layer (1b) covering a hinge (20)-side surface of the steel plate (1a), and
the first resin layer (1b) is thicker than a hinge resin layer (23) covering the hinge (20),
**characterised in that**,
the central part (2) is disposed closer to a center of the vehicle roof than the attachment part (1) is,
wherein the second resin layer (1c) covers the central part (2), and
the first resin layer (1b) is thicker than the second resin layer (1c).

2. The vehicle roof (10d) according to Claim 1, further comprising a third resin layer (1d) covering a vehicle-interior-side surface of the steel plate (1a), wherein
the first resin layer (1b) is thicker than the third resin layer (1d).

3. The vehicle roof (10b, 10d) according to Claim 1, wherein a vehicle-interior-side surface of the steel plate (1a) is not coated with any resin layer (1d).

4. The vehicle roof (10b) according to any one of Claims 1 to 3, wherein the attachment part (1) and the central part (2) are formed by using a tailored blank material.

## Patentansprüche

1. Fahrzeugdach (10b, 10d), das ein Befestigungsteil (1), an dem ein Scharnier (20) befestigt ist, ein Mittelteil (2) und eine zweite Harzschicht (1c) umfasst, wobei das Befestigungsteil (1) eine Stahlplatte (1a) und eine erste Harzschicht (1b) umfasst, die eine Scharnier(20)-seitige Oberfläche der Stahlplatte (1a) bedeckt, und
die erste Harzschicht (1b) dicker ist als eine Scharnierharzschicht (23), die das Scharnier (20) bedeckt,
**dadurch gekennzeichnet, dass**
das Mittelteil (2) näher an einer Mitte des Fahrzeugdachs angeordnet ist als das Befestigungsteil (1),
wobei die zweite Harzschicht (1c) das mittlere Teil (2) bedeckt und
die erste Harzschicht (1b) dicker ist als die zweite Harzschicht (1c).

2. Fahrzeugdach (10d) nach Anspruch 1, ferner umfassend eine dritte Harzschicht (1d), die eine Fahrzeuginnenseitenoberfläche der Stahlplatte (1a) bedeckt, wobei
die erste Harzschicht (1b) dicker ist als die dritte Harzschicht (1d).

3. Fahrzeugdach (10b, 10d) nach Anspruch 1, wobei eine Fahrzeuginnenseitenoberfläche der Stahlplatte (1a) mit keiner Harzschicht (1d) beschichtet ist.

4. Fahrzeugdach (10b) nach einem der Ansprüche 1 bis 3, wobei das Befestigungsteil (1) und das Mittelteil (2) unter Verwendung eines zugeschnittenen Rohmaterials ausgebildet werden.

## Revendications

1. Toit de véhicule (10b, 10d) comprenant une partie de fixation (1) à laquelle une charnière (20) est fixée, une partie centrale (2) et une deuxième couche de résine (1c), la partie de fixation (1) comprenant une plaque d'acier (1a) et une première couche de résine (1b) recouvrant une surface côté charnière (20) de la plaque d'acier (1a), et
la première couche de résine (1b) étant plus épaisse qu'une couche de résine de charnière (23) recouvrant la charnière (20),
**caractérisé en ce que**
la partie centrale (2) est disposée plus près du centre du toit de véhicule que la partie de fixation (1) ;
la deuxième couche de résine (1c) recouvrant la partie centrale (2), et
la première couche de résine (1b) étant plus épaisse que la deuxième couche de résine (1c).

2. Toit de véhicule (10d) selon la revendication 1, comprenant en outre une troisième couche de résine (1d) recouvrant une surface de la plaque d'acier (1a) côté intérieur de véhicule ;
la première couche de résine (1b) étant plus épaisse que la troisième couche de résine (1c).

3. Toit de véhicule (10b, 10d) selon la revendication 1, dans lequel une surface de la plaque d'acier (1a) côté intérieur de véhicule n'est recouverte d'aucune couche de résine (1d).

4. Toit de véhicule (10b) selon l'une quelconque des revendications 1 à 3, dans lequel la partie de fixation (1) et la partie centrale (2) sont formées à l'aide d'un matériau d'ébauche sur mesure.
